# FASCICULE DE BREVET EUROPEEN

(11) **EP 2 059 339 B1**
(45) Date de publication et mention de la délivrance du brevet: **24.11.2021**
(21) Numéro de dépôt: 07819969.2
(22) Date de dépôt: 28.08.2007
(51) Int. Cl.: B01J 21/02, B01J 21/06, B01J 21/08, B01J 21/16, B01J 23/00, B01J 23/30, B01J 35/02, B01J 37/00, B01J 37/02, B01J 37/04, B01J 37/08

(54) **COMPOSITION A RÉDUCTIBILITÉ ÉLEVÉE À BASE D'UN OXYDE DE CÉRIUM NANOMÉTRIQUE SUR UN SUPPORT, PROCÉDÉ DE PRÉPARATION ET UTILISATION COMME CATALYSEUR**
ZUSAMMENSETZUNG MIT HOHER REDUKTIONSFÄHIGKEIT AUS NANOMETRISCHEM CERIUMOXID AUF EINEM TRÄGER, VERFAHREN ZUR HERSTELLUNG UND VERWENDUNG ALS KATALYSATOR
COMPOSITION WITH HIGH REDUCIBILITY MADE OF A NANOMETRIC CERIUM OXIDE ON A SUPPORT, METHOD OF PREPARATION AND USE AS CATALYST

(30) Priorité: 31.08.2006 FR 0607658
(43) Date de publication de la demande: 20.05.2009
(73) Titulaire: RHODIA OPERATIONS, 93300 Aubervilliers (FR)
(72) Inventeur: FAJARDIE, Franck, 92500 Rueil-Malmaison (FR); VERDIER, Stephan, 69008 Lyon (FR)
(74) Mandataire: Senninger, Thierry
(86) Numéro de dépôt international: PCT/EP2007/058901
(87) Numéro de publication internationale: WO 2008/025753

(56) Documents cités:
- EP-A1- 0 700 870
- WO-A-01/36331
- WO-A-01/94262
- WO-A-03/022430
- WO-A-2005/012465
- WO-A-2005/084796
- FR-A- 2 809 637
- US-A- 4 621 071
- US-A1- 5 021 192
- US-A1- 5 376 305
- US-A1- 5 532 198
- US-B1- 6 294 140
- None

## Description

La présente invention concerne une composition à réductibilité élevée à base d'un oxyde de cérium nanométrique sur un support et son utilisation comme catalyseur, comme défini dans les revendications.

On utilise à l'heure actuelle pour le traitement des gaz d'échappement des moteurs à combustion interne (catalyse postcombustion automobile) des catalyseurs dits multifonctionnels. Par multifonctionnels, on entend les catalyseurs capables d'opérer non seulement l'oxydation en particulier du monoxyde de carbone et des hydrocarbures présents dans les gaz d'échappement mais également la réduction notamment des oxydes d'azote également présents dans ces gaz (catalyseurs "trois voies"). L'oxyde de zirconium et l'oxyde de cérium apparaissent aujourd'hui comme deux constituants particulièrement importants et intéressants pour ce type de catalyseurs.

Pour être efficaces, ces catalyseurs doivent présenter une bonne réductibilité. On entend par réductibilité, ici et pour le reste de la description, la capacité du catalyseur à se réduire en atmosphère réductrice et à se réoxyder en atmosphère oxydante. Cette réductibilité peut se mesurer par exemple par une consommation d'hydrogène dans un domaine de températures donné. Elle est due au cérium dans le cas des compositions du type de celles de l'invention, le cérium ayant la propriété de se réduire ou de s'oxyder.

On recherche donc pour leur efficacité des matériaux de réductibilité de plus en plus élevée. Un premier objet de l'invention est donc la mise au point de tels matériaux.

Par ailleurs, on recherche aussi des matériaux dont la réductibilité est importante même dans une gamme de température peu élevée, c'est-à-dire d'au plus 600°C.

Un second objet de l'invention est de fournir des matériaux qui satisfont à cette dernière condition.

Dans ce but, la composition selon l'invention est telle que décrite à la revendication 1.

US 5,376,305, US 5,021,192, WO 01/94262, US 5,532,198, US 6,294,140 et WO 2005/084796 ne décrivent pas une composition selon la revendication 1. L'exemple 1 de WO 2005/084796 décrit une composition comprenant du platine et une proportion en oxyde de cérium supporté sur de l'alumine supérieure à celle revendiquée.

D'autres caractéristiques, détails et avantages de l'invention apparaîtront encore plus complètement à la lecture de la description qui va suivre, ainsi que des divers exemples concrets mais non limitatifs destinés à l'illustrer.

Par terre rare on entend les éléments du groupe constitué par l'yttrium et les éléments de la classification périodique de numéro atomique compris inclusivement entre 57 et 71.

On entend par surface spécifique, la surface spécifique B.E.T. déterminée par adsorption d'azote conformément à la norme ASTM D 3663-78 établie à partir de la méthode BRUNAUER - EMMETT- TELLER décrite dans le périodique "The Journal of the American Chemical Society, 60, 309 (1938)".

La composition de l'invention consiste en un oxyde supporté et un support, les particules étant de dimensions nanométriques et étant déposées sur un support, comme défini dans les revendications.

Cet oxyde supporté est un oxyde de cérium seul, oxyde simple, généralement sous forme d'oxyde cérique CeO₂.

Selon un mode de réalisation particulier, l'oxyde supporté est sous forme cristallisée.

L'oxyde supporté est présent dans la composition de l'invention sous forme de particules de dimensions nanométriques. On entend par là que les particules présentent une taille d'au plus 50 nm. On doit noter ici que ces particules peuvent être soit individualisées soit sous forme d'agrégats. La valeur de 50 nm s'applique soit à la taille des particules quand celles-ci sont individualisées soit à la taille de l'agrégat dès lors qu'il y a des particules agrégées. Par ailleurs, cette taille peut être plus particulièrement d'au plus 10 nm. Les valeurs de taille les plus élevées données ci-dessus correspondent aux cas où les particules sont le plus souvent sous une forme agrégée alors que les valeurs les plus faibles correspondent aux cas où les particules sont le plus souvent sous une forme individualisée. Plus particulièrement, les particules sont sous forme individualisée de taille d'environ au plus 50 nm, encore plus particulièrement d'au plus 10 nm ou encore de taille comprise entre 10 nm et 5 nm et, dans le cas où l'oxyde est cristallisé, elles correspondent à des cristallites de cet oxyde. Selon un mode de réalisation particulier les particules sont sous forme individualisée de taille d'au plus 5 nm, ce mode de réalisation correspondant au cas où la teneur en oxyde supporté de la composition est relativement faible, cette teneur faible étant précisée plus loin. Les valeurs de taille données ici et dans la présente description sont par diffraction des rayons X (DRX) en particulier lorsque l'oxyde est cristallisé.

Ces valeurs de taille de particules de l'oxyde supporté sont données pour une composition ayant subi une calcination pendant 6 heures à une température d'au moins 500°C, plus particulièrement d'au moins 800°C.

Comme indiqué plus haut, les particules sont déposées sur un support. On entend par là que les particules sont majoritairement présentes sur la surface de ce support étant entendu que les particules peuvent être présentes à l'intérieur des pores du support mais en restant à la surface de ces pores.

Le support est à base d'alumine. De préférence, ce support doit présenter une surface spécifique élevée et stable, c'est-à-dire qui reste à une valeur suffisante même après exposition à une température élevée.

On peut utiliser ici tout type d'alumine susceptible de présenter une surface spécifique suffisante pour une application en catalyse. On peut mentionner les alumines issues de la déshydratation rapide d'au moins un hydroxyde d'aluminium, tel que la bayérite, l'hydrargillite ou gibbsite, la nordstrandite, et/ou d'au moins un oxyhydroxyde d'aluminium tel que la boehmite, la pseudoboehmite et le diaspore.

Selon un mode de réalisation particulier de l'invention, on utilise une alumine stabilisée. Comme élément stabilisant on peut citer les terres rares, le silicium et le zirconium. Comme terre rare on peut mentionner tout particulièrement le cérium, le lanthane ou le mélange lanthane-néodyme. Ces éléments peuvent être utilisés seuls ou en combinaison. Comme combinaisons avantageuses, on peut citer La-Pr.

La préparation de l'alumine stabilisée se fait d'une manière connue en soi, notamment par imprégnation de l'alumine par des solutions de sels, comme les nitrates, des éléments stabilisants précités ou encore par coséchage d'un précurseur d'alumine et de sels de ces éléments puis calcination.

On peut citer par ailleurs une autre préparation de l'alumine stabilisée dans laquelle la poudre d'alumine issue de la déshydratation rapide d'un hydroxyde ou d'un oxyhydroxyde d'aluminium est soumise à une opération de mûrissement en présence d'un agent stabilisant constitué par un composé du lanthane et, éventuellement, un composé du néodyme, ce composé pouvant être plus particulièrement un sel. Le mûrissement peut se faire par mise en suspension de l'alumine dans l'eau puis chauffage à une température comprise par exemple entre 70 et 110°C. Après le mûrissement, l'alumine est soumise à un traitement thermique.

La teneur en stabilisant exprimée en poids d'oxyde de stabilisant par rapport à l'alumine stabilisée est comprise généralement entre 1,5% et 35%, ou enocre entre 1,5% et 25%, notamment entre 1,5% et 15%. Cette teneur peut être plus particulièrement comprise entre 2,5% et 20%, plus particulièrement entre 2,5 et 11% ou encore entre 5% et 20%.

Le support consiste en de l'alumine (premier mode) ou consiste en de l'alumine stabilisée par au moins un élément choisi parmi les terres rares, le silicium et le zirconium (second mode). Dans le cas du premier mode, le support ne contient que de l'alumine et pas d'autre élément susceptible de stabiliser celle-ci. Dans le cas du second mode, le support ne contient que de l'alumine et, à titre de stabilisant, qu'un ou plusieurs éléments en combinaison choisi(s) uniquement dans le groupe constitué par les terres rares, le silicium et le zirconium.

La teneur en oxyde supporté est d'au plus 60% en masse de l'ensemble de la composition. Elle peut être notamment d'au plus 50% et encore plus particulièrement d'au plus 30%.

La teneur minimale en oxyde supporté est fixée en fonction des performances recherchées de la composition. A titre d'exemple seulement, cette teneur minimale est généralement d'au moins 3%, plus particulièrement d'au moins 4% en masse.

Comme indiqué plus haut, les particules de l'oxyde supporté peuvent être sous forme individualisée de taille d'au plus 5 nm. Ce mode de réalisation correspond de préférence aux compositions dans lesquelles la teneur en oxyde supportée est d'au plus 20% en masse, plus particulièrement d'au plus 15% et encore plus particulièrement d'au plus 10%.

Une caractéristique intéressante des compositions de l'invention est leur réductibilité.

La réductibilité des compositions est déterminée par la mesure de leur consommation d'hydrogène mesurée entre 30°C et 600°C ou 900°C. Cette mesure est faite par réduction programmée en température en utilisant de l'hydrogène dilué dans l'argon. On détecte un signal avec un détecteur de conductivité thermique. La consommation de l'hydrogène est calculée à partir de la surface manquante du signal d'hydrogène de la ligne de base à 30°C à la ligne de base à 600°C ou 900°C. Le taux de réductibilité représente le pourcentage de cérium réduit, étant entendu qu'1/2 mole d'H₂ consommée et mesurée par la méthode décrite plus haut correspond à 1 mole de Ce IV réduit.

Au sens de la présente invention et pour les compositions ne comprenant que du cérium comme élément réductible la réductibilité mesurée entre 30°C et 900°C correspond au pourcentage du cérium total présent dans l'oxyde supporté qui a été réduit, ce pourcentage étant mesuré par la méthode décrite plus haut dans la gamme de température allant de 30°C à 900°C. La réductibilité mesurée entre 30°C et 600°C correspond à la même mesure mais faite dans la gamme de température de 30°C à 600°C.

Par ailleurs et pour l'ensemble de la description, les valeurs qui sont données pour la réductibilité résultent de mesures faites sur des compositions qui ont préalablement subi une calcination de 6 heures à une température d'au moins 800°C sous air.

Comme indiqué plus haut, les compositions de l'invention présentent une réductibilité mesurée entre 30°C et 900°C d'au moins 80%. Cette réductibilité ainsi mesurée peut être plus particulièrement d'au moins 85% et encore plus particulièrement d'au moins 90%.

Un mode de réalisation plus particulier de l'invention donne des compositions dont la réductibilité est importante même dans une gamme de température peu élevée, c'est-à-dire d'au plus 600°C. Dans ce cas, ces compositions peuvent présenter une réductibilité mesurée entre 30°C et 600°C (après aussi calcination 6 heures à une température d'au moins 800°C) d'au moins 35%, plus particulièrement d'au moins 40%. Bien entendu, ces compositions présentent aussi les mêmes valeurs de réductibilité mesurée entre 30°C et 900°C que celles qui ont été données plus haut.

Enfin, les compositions de l'invention peuvent présenter une surface spécifique BET élevée qui peut être, après calcination 6 heures à 800°C, d'au moins 95 m²/g, plus particulièrement d'au moins 110 m²/g, cette surface dépendant de la nature du support utilisé.

Des procédés de préparation des compositions de l'invention vont maintenant être décrits.

La suite de la description comprendra la description de procédés de préparation de compositions de l'invention.

### A Premier procédé de préparation des compositions de l'invention

Ce premier procédé comprend les étapes suivantes :
- on met en présence une dispersion colloïdale de l'oxyde supporté etet une suspension colloïdale du support;
- on sèche par atomisation le mélange ainsi formé;
- on calcine le produit séché ainsi obtenu.

La première étape de ce procédé consiste donc à former un mélange à partir d'une dispersion colloïdale de l'oxyde de cérium.

Par dispersion colloïdale on désigne tout système constitué de fines particules solides de dimensions colloïdales, c'est à dire des dimensions comprises entre 1nm et 50nm, à base d'un composé de cérium, ce composé étant généralement un oxyde et/ou un oxyde hydraté, en suspension stable dans une phase liquide aqueuse, lesdites particules pouvant en outre, éventuellement, contenir des quantités résiduelles d'ions liés ou adsorbés tels que par exemple des nitrates, des acétates, des chlorures ou des ammoniums.

On peut mentionner ainsi comme dispersions adaptées d'oxyde de cérium celles décrites ou obtenues par les procédés décrits dans les demandes de brevet EP-A-206906, EP-A-208580, EP-A-208581, EP-A-239477 et EP-A-700870.

On peut utiliser en particulier une dispersion colloïdale de l'oxyde de cérium, oxyde simple, qui comprend un acide aminé. Cet acide peut être plus particulièrement un acide aminé aliphatique. Ce peut être notamment un acide en C₄-C₁₀ et de préférence un acide en C₄-C₈. Une telle dispersion est décrite dans la demande de brevet EP-A-1301435.

On forme un mélange de la dispersion avec une suspension du support. Cette suspension est généralement à base du support ou d'un précurseur du support, c'est à dire un composé qui après calcination peut conduire à de l'alumine. Il peut s'agir de précurseurs séchés, c'est-à-dire présentant un perte au feu d'au plus 50%, plus particulièrement d'au plus 25%. Ce peut être notamment des hydroxydes ou des oxyhydroxydes. La suspension est généralement une suspension aqueuse

Le mélange se fait en phase aqueuse, l'eau généralement et par exemple l'eau distillée ou permutée.

La deuxième étape du procédé est une étape de séchage.

Ce séchage se fait par atomisation.

On entend par séchage par atomisation un séchage par pulvérisation du mélange dans une atmosphère chaude (spray-drying). L'atomisation peut être réalisée au moyen de tout pulvérisateur connu en soi, par exemple par une buse de pulvérisation du type pomme d'arrosoir ou autre. On peut également utiliser des atomiseurs dits à turbine. Sur les diverses techniques de pulvérisation susceptibles d'être mises en œuvre dans le présent procédé, on pourra se référer notamment à l'ouvrage de base de MASTERS intitulé "SPRAY-DRYING" (deuxième édition, 1976, Editions George Godwin - London).

La dernière étape du procédé est une étape de calcination.

Cette calcination permet de développer la cristallinité du produit formé et elle peut être également ajustée et/ou choisie en fonction de la température d'utilisation ultérieure réservée à la composition selon l'invention, et ceci en tenant compte du fait que la surface spécifique du produit est d'autant plus faible que la température de calcination mise en œuvre est plus élevée. Une telle calcination est généralement opérée sous air, mais une calcination menée par exemple sous gaz inerte ou sous atmosphère contrôlée (oxydante ou réductrice) n'est bien évidemment pas exclue.

En pratique, on limite généralement la température de calcination à un intervalle de valeurs comprises entre 500°C et 1000°C, de préférence entre 600°C et 800°C.

Selon une première variante de ce procédé il est possible d'effectuer une simple calcination sous H₂ à une température comprise entre 800 et 1000°C pendant au moins 2h, plus particulièrement au moins 4h, et encore plus particulièrement au moins 6h

Selon une autre variante de ce procédé, il est possible d'effectuer une double calcination. On peut ainsi effectuer une première calcination sous gaz inerte ou sous vide. Le gaz inerte peut être l'hélium, l'argon ou l'azote. Le vide est généralement un vide primaire avec une pression partielle en oxygène inférieure à 10⁻¹ mbar. La température de calcination est d'au moins 900°C et généralement d'au plus 1000°C. La durée de cette première calcination est généralement d'au moins 2 heures de préférence d'au moins 4 heures et notamment d'au moins 6 heures. Une augmentation de cette durée entraîne habituellement une augmentation du taux de réductibilité. Bien entendu, la durée peut être fixée en fonction de la température, une durée de calcination faible nécessitant une température plus élevée.

On effectue ensuite une seconde calcination sous atmosphère oxydante, par exemple sous air. Dans ce cas, la calcination se fait généralement à une température d'au moins 600°C sur une durée qui est généralement d'au moins 30 minutes. Il est préférable de ne pas dépasser une température de calcination de 900°C.

### C Second procédé de préparation des compositions de l'invention

Les compositions de l'invention peuvent aussi être préparées par un second procédé qui va être décrit ci-dessous.

Ce procédé comprend les étapes suivantes :
- on forme un mélange liquide comprenant un sel de cérium et et une suspension du support;
- on chauffe le mélange ainsi formé à une température d'au moins 100°C;
- on récupère le précipité ainsi obtenu;
- on calcine ledit précipité.

Pour la première étape on part aussi d'une suspension ou d'une dispersion colloïdale du support mais on la mélange avec un sel de cérium . Ce mélange se fait en phase aqueuse, l'eau généralement.

Les sels peuvent être choisis parmi les nitrates, les sulfates, les acétates, les chlorures, le nitrate céri-ammoniacal.

On peut citer aussi notamment les sels de cérium IV tels que le nitrate ou le nitrate céri-ammoniacal par exemple, qui conviennent ici particulièrement bien. De préférence, on utilise du nitrate cérique.

L'étape suivante du procédé est l'étape de chauffage du mélange liquide ainsi formé.

La température à laquelle est chauffé le mélange liquide est d'au moins 100°C et encore plus particulièrement d'au moins 130°C. L'opération de chauffage peut être conduite en introduisant le mélange liquide dans une enceinte close (réacteur fermé du type autoclave). Dans les conditions de températures données ci-dessus, et en milieu aqueux, on peut ainsi préciser, à titre illustratif, que la pression dans le réacteur fermé peut varier entre une valeur supérieure à 1 Bar (10⁵ Pa) et 165 Bar (1,65. 10⁷ Pa), de préférence entre 5 Bar (5. 10⁵ Pa) et 165 Bar (1,65. 10⁷ Pa). On peut aussi effectuer le chauffage dans un réacteur ouvert pour les températures voisines de 100°C.

Le chauffage peut être conduit soit sous air, soit sous atmosphère de gaz inerte, de préférence l'azote.

La durée du chauffage peut varier dans de larges limites, par exemple entre 1 et 48 heures, de préférence entre 2 et 24 heures. De même, la montée en température s'effectue à une vitesse qui n'est pas critique, et on peut ainsi atteindre la température réactionnelle fixée en chauffant le mélange liquide par exemple entre 30 minutes et 4 heures, ces valeurs étant données à titre tout à fait indicatif.

A l'issue de l'étape de chauffage, on récupère un précipité solide qui peut être séparé de son milieu par toute technique classique de séparation solide-liquide telle que par exemple filtration, décantation, essorage ou centrifugation.

Le produit tel que récupéré peut ensuite être soumis à des lavages, qui sont alors opérés à l'eau ou éventuellement avec une solution basique, par exemple une solution d'ammoniaque ou encore une solution acide, une solution d'acide nitrique par exemple.

Selon une variante particulière de l'invention, le procédé comprend un mûrissement.

Ce mûrissement s'effectue généralement sur une suspension obtenue après remise dans l'eau du précipité, notamment après le lavage. Le mûrissement se fait en chauffant de nouveau cette suspension. La température à laquelle est chauffée la suspension est d'au moins 40°C, plus particulièrement d'au moins 60°C et encore plus particulièrement d'au moins 100°C. Généralement cette température est d'au plus 200°C, plus particulièrement d'au plus 150°C. Le milieu est maintenu ainsi à une température constante pendant une durée qui est habituellement d'au moins 30 minutes et plus particulièrement d'au moins 1 heure. Le mûrissement peut se faire à la pression atmosphérique ou éventuellement à une pression plus élevée.

La dernière étape de calcination de ce second procédé peut être mise en œuvre de la même manière que pour le premier procédé et donc ce qui a été décrit plus haut pour cette calcination s'applique de même ici.

Dans le cas de la préparation de compositions avec un support consistant en de l'alumine stabilisée par un élément stabilisant choisi parmi les terres rares, deux autres procédés (troisième et quatrième procédés) peuvent être mis en œuvre qui vont maintenant être décrits.

### D Troisième procédé de préparation des compositions de l'invention

Le troisième procédé selon l'invention comprend les étapes suivantes :
- (a) on forme un mélange liquide comprenant une dispersion colloïdale de l'oxyde supporté, un composé de l'aluminium et un composé de l'élément stabilisant;
- (b) on met en présence le mélange précédent avec une base ce par quoi on obtient une suspension comprenant un précipité;
- (c) on soumet éventuellement la suspension à un mûrissement;
- (d) on sèche la suspension ainsi obtenue;
- (e) on calcine le produit séché ainsi obtenu.

Le mélange de l'étape (a) se fait en phase aqueuse, l'eau généralement.

Pour l'oxyde supporté, on utilise toute dispersion colloïdale du type décrit plus haut.

Le composé de l'élément stabilisant peut être notamment un sel, comme un nitrate, un acétate, un chlorure, un sulfate, sous forme d'une solution.

Le composé de l'aluminium est généralement un précurseur de l'alumine, c'est à dire un composé qui après calcination peut conduire à de l'alumine. Ce composé peut être ainsi un hydroxyde d'aluminium tel que la bayerite, l'hydrargillite ou gibbsite, la nordstrandite ou un oxyhydroxyde d'aluminium tel que la boehmite, la pseudoboehmite et le diaspore. Le composé d'aluminium peut se présenter sous la forme d'une suspension aqueuse, notamment d'une suspension acide contenant par exemple de l'acide nitrique. Cette suspension est alors mélangée avec la dispersion de l'oxyde supporté et l'élément stabilisant, celui-ci sous forme d'une solution par exemple.

La deuxième étape du procédé consiste à mettre en présence le mélange obtenu à l'étape (a) avec une base.

On peut utiliser comme base les produits du type hydroxyde, carbonate ou hydroxy-carbonate par exemple. On peut citer les hydroxydes d'alcalins ou d'alcalino-terreux, les amines secondaires, tertiaires ou quaternaires. Toutefois, les amines et l'ammoniaque peuvent être préférés dans la mesure où ils diminuent les risques de pollution par les cations alcalins ou alcalino terreux. On peut aussi mentionner l'urée.

La mise en contact peut se faire dans un ordre quelconque en milieu liquide.

La mise en contact avec la base conduit à la formation d'un précipité en suspension dans le milieu liquide réactionnel.

La troisième étape est une étape éventuelle simplement. Cet étape (c) consiste à soumettre la suspension à un mûrissement. Le mûrissement se fait en chauffant la suspension à une température d'au moins 60°C, plus particulièrement d'au moins 80°C. Généralement cette température est d'au plus 200°C, plus particulièrement d'au plus 150°C. Le milieu est maintenu ainsi à une température constante pendant une durée qui est habituellement d'au moins 30 minutes et plus particulièrement d'au moins 1 heure. Le mûrissement peut se faire à la pression atmosphérique ou éventuellement à une pression plus élevée.

A l'issue de l'étape (b) ou, éventuellement de l'étape de mûrissement lorsque celle-ci est mise en oeuvre, on effectue les étapes (d) et (e) mentionnées plus haut. Ces deux étapes sont semblables à deux dernières étapes du premier procédé de l'invention et tout ce qui a été décrit plus haut s'applique de même à ces étapes (d) et (e). On notera toutefois que le séchage peut se faire par un autre moyen que l'atomisation, par exemple dans un four.

Une variante peut être utilisée dans le cadre de ce troisième procédé. Cette variante consiste, à l'issue de l'étape (b) ou, éventuellement de l'étape de mûrissement lorsque celle-ci est mise en oeuvre, à séparer le précipité de la suspension, à le laver et à le remettre en dispersion dans l'eau pour former une seconde suspension. C'est cette dernière suspension qui est ensuite séchée dans l'étape (d).

La dernière étape de calcination de ce troisième procédé peut être mise en œuvre de la même manière que pour les procédés précédents et donc ce qui a été décrit plus haut pour cette calcination s'applique de même ici.

### E Quatrième procédé de préparation des compositions de l'invention

Le quatrième procédé de l'invention est décrit maintenant ci-dessous.

Ce procédé comprend les étapes suivantes.
- (a) on forme un mélange liquide comprenant une dispersion colloïdale de l'oxyde supporté et un composé de l'aluminium;
- (b) on met en présence le mélange précédent avec une base ce par quoi on obtient une suspension comprenant un précipité;
- (c) on soumet éventuellement la suspension à un mûrissement;
- (d) on ajoute à la suspension ainsi obtenue un composé de l'élément stabilisant;
- (e) on sèche la suspension issue de l'étape précédente;
- (f) on calcine le produit séché ainsi obtenu.

Ce procédé se distingue du troisième procédé par le fait que le composé de l'élément stabilisant est apporté dans une étape différente, à l'issue de l'étape (b) ou, éventuellement de mûrissement si celle-ci existe. En conséquence, tout ce qui a été décrit pour le troisième procédé s'applique de même ici. Le composé de l'élément stabilisant est notamment du même type que décrit précédemment. Par ailleurs, on peut mettre aussi en œuvre la variante décrite plus haut pour le troisième procédé et dans laquelle, à l'issue de l'étape (b) ou, éventuellement de l'étape de mûrissement lorsque celle-ci est mise en œuvre, on sépare le précipité de la suspension, on le lave et on le remet en dispersion dans l'eau pour former une seconde suspension. Dans ce cas, le composé de l'élément stabilisant est ajouté à cette seconde suspension.

Les compositions de l'invention telles que décrites plus haut ou telles qu'obtenues par les procédés décrits précédemment se présentent sous forme de poudres mais elles peuvent éventuellement être mises en forme pour se présenter sous forme de granulés, billes, cylindres ou nids d'abeille de dimensions variables.

Les compositions de l'invention peuvent être utilisées comme catalyseurs ou supports de catalyseur. Ainsi, l'invention concerne aussi des systèmes catalytiques comprenant les compositions de l'invention. Ces systèmes comprennent un revêtement (wash coat) à propriétés catalytiques à base de ces compositions et d'un liant de type connu, sur un substrat du type par exemple monolithe métallique ou en céramique. Le revêtement peut comporter lui aussi un support du type de ceux mentionnés plus haut. Ce revêtement est obtenu par mélange de la composition avec le liant de manière à former une suspension qui peut être ensuite déposée sur le substrat.

Ces systèmes catalytiques et plus particulièrement les compositions de l'invention peuvent trouver de très nombreuses applications. Ils sont ainsi particulièrement bien adaptés à, et donc utilisables dans la catalyse de diverses réactions telles que, par exemple, la déshydratation, l'hydrosulfuration, l'hydrodénitrification, la désulfuration, l'hydrodésulfuration, la déshydrohalogénation, le reformage, le reformage à la vapeur, le craquage, l'hydrocraquage, l'hydrogénation, la déshydrogénation, l'isomérisation, la dismutation, l'oxychloration, la déshydrocyclisation d'hydrocarbures ou autres composés organiques, les réactions d'oxydation et/ou de réduction, la réaction de Claus, le traitement des gaz d'échappement des moteurs à combustion interne, en particulier pour la post combustion automobile et notamment la catalyse trois voies, la démétallation, la méthanation, la shift conversion, l'oxydation catalytique des suies émises par les moteurs à combustion interne comme les moteurs diesel ou essence fonctionnant en régime pauvre. Les systèmes catalytiques et les compositions de l'invention peuvent enfin être utilisés pour l'élimination des NOx par piégeage de ceux-ci ou comme catalyseur de la réduction sélective des NOx par l'urée/ammoniaque.

Dans le cas de ces utilisations en catalyse, les compositions de l'invention peuvent être employées en combinaison avec des métaux précieux ou encore des métaux de transition sous forme oxyde, sulfure ou autre et elles jouent ainsi le rôle de support pour ces métaux. La nature de ces métaux et les techniques d'incorporation de ceux-ci dans les compositions supports sont bien connues de l'homme du métier. Par exemple, les métaux peuvent être l'or, l'argent, le platine, le rhodium, le palladium ou l'iridium, le molybdène, le tungstène, le nickel, le cobalt, le manganèse ou le vanadium; ils peuvent notamment être incorporés aux compositions par imprégnation.

Parmi les utilisations citées, le traitement des gaz d'échappement des moteurs à combustion interne (catalyse post combustion automobile) constitue une application particulièrement intéressante. De ce fait, l'invention concerne aussi un procédé de traitement des gaz d'échappement des moteurs à combustion interne qui est caractérisé en ce qu'on utilise à titre de catalyseur un système catalytique tel que décrit ci-dessus ou une composition selon l'invention et telle que décrite précédemment.

On notera que les compositions de l'invention dans lesquelles le support est à base d'alumine stabilisée sont particulièrement intéressantes comme piège à NOx. L'invention concerne donc aussi un procédé de traitement des gaz d'échappement des moteurs à combustion interne qui est caractérisée en ce qu'on utilise à titre de piège à NOx une composition selon l'invention dans laquelle le support est à base d'alumine stabilisée ou un système catalytique comprenant une telle composition.

Pour le traitement des gaz d'échappement les systèmes précités sont montés d'une manière connue dans les pots d'échappement des véhicules automobiles.

Des exemples vont maintenant être donnés.

### EXEMPLE 1 (hors invention)

Cet exemple concerne une composition à base d'oxyde de cérium sur un support en silice et qui est préparée par le second procédé décrit plus haut.

Un mélange contenant 70% de SiO₂ et 30% de CeO₂ est réalisé en mélangeant dans un bécher sous agitation, 35 g de poudre de SiO₂ (170 m²/g) dispersée dans 500ml d'H₂O à pH 0,5 avec une solution acide (pH 0,5) de Ce(NO₃)₄ contenant 15 g de CeO₂ (CeO₂ 80 g/l). L'ensemble est transféré dans un autoclave et amené sous agitation à 300 tours/min à 150°C pendant 2 heures.

Le mélange refroidi est séparé par filtration et lavé avec 2 l d'eau à pH 9. Le gâteau obtenu est dispersé dans l'eau à une concentration en oxyde de 50 g/l (oxyde) puis mûri 2 heures à 100°C sous agitation. Après refroidissement, la suspension est séparée par centrifugation. Le gâteau est ensuite calciné sous air à 800°C pendant 6h.

### EXEMPLE 2 (hors invention)

Cet exemple concerne une composition à base d'un oxyde mixte de cérium et de zirconium sur un support en silice et qui est préparée par le premier procédé décrit plus haut.

On procède au préalable à la préparation d'une dispersion colloïdale de particules d'un oxyde mixte de formule Ce_{0.5}Zr_{0.5}O₂.

Pour cela on mélange 95,7 ml d'une première solution contenant 1,5 M/l de Ce(NO₃)₄ et 0,5 M en HNO₃ avec 43,7 ml d'une deuxième solution contenant 3,3 M/l de ZrO(NO₃)₂. Le volume de la solution obtenue est ramené à 2300 ml par ajout d'eau. Le pH final est de 1,9.

On ajoute de manière instantanée 186 ml de solution de NH₃ à 28%. Le pH augmente à 10 et on observe la formation d'un précipité.

Le précipité est filtré puis lavé avec 2400 ml d'eau permutée. On renouvelle 3 fois de suite le lavage avec un volume de solution de lavage identique. Le pH de la dernière suspension est de 7,5.

On remet le gateau en suspension dans une solution contenant 20,2 g d'une solution d'acide nitrique HNO₃ à 68% (H⁺/(Ce+Zr)=0,75 en mole) et on complète à 500 ml par addition d'eau permutée. La concentration en Ce+Zr est égale à 0,29 mol/l. Après une nuit sous agitation, on obtient une dispersion colloïdale limpide à l'œil de taille 4 nm.

On ajoute à cette dispersion de l'acide aminocaproïque de manière à obtenir un pH final de 4,5 (acide 6-aminocaproïque 98% Alddrich).

Dans un bécher sous agitation, on ajoute 100 g de poudre de SiO₂ (170 m²/g) dans 550 ml de la dispersion colloïdale d'oxyde mixte Ce/Zr. Le mélange est maintenu 15 minutes sous agitation.

Cette suspension est atomisée à 110°C, (température de sortie 110°C, température d'entrée 220°C) avec un débit de 1 l/h.

La poudre est calcinée sous air à 800°C pendant 6h.

### EXEMPLE 3 (hors invention)

Cet exemple concerne une composition à base d'un oxyde mixte de cérium et de zirconium sur un support en alumine et qui est préparée par le premier procédé décrit plus haut.

Dans un bécher muni d'un barreau aimanté un sol de boehmite est réalisé en dispersant sous agitation 78,6 g d'une poudre d'AlOOH (Alumine Pural B21 à 71,25% Al₂O₃) dans 700 ml H₂O amené à pH 2 à l'aide d'une solution HNO₃ concentrée à 68%. Après quelques heures on obtient un gel à pH 4.

Parallèlement, on procède à la préparation d'une dispersion colloïdale de particules d'oxyde mixte de formule Ce_{0.5}Zr_{0.5}O₂ comme décrit dans l'exemple 2. On y ajoute de même de l'acide aminocaproïque de manière à obtenir un pH final de 4,5.

On introduit sous agitation dans les 700 ml de la dispersion de boehmite précédemment réalisée, 2 litres de la dispersion d'oxyde mixte CeO₂/ZrO₂ à raison de 50 ml/mn. Le mélange est maintenu 15 minutes sous agitation, puis atomisé (température d'entrée 245°C, température de sortie 110°C) débit 1 litre/heure.

La poudre est calcinée sous air à 800°C pendant 6h.

On donne dans le tableau 1 qui suit les caractéristiques de taille de l'oxyde supporté et de surface de la composition pour les compositions préparées dans les exemples 1 à 3.

**Tableau 1 (hors invention)**

| Exemple | Tailles des particules supportées et surfaces Calcination 800°C/6h | |
|---|---|---|
| | Taille RX (nm) | SBET (m²/g) |
| 1 | 6 | 161 |
| 2 | 6 | 95 |
| 3 | 6 | 113 |

### EXEMPLE 4 (hors invention)

Dans cet exemple, on donne les valeurs de réductibilité du cérium mesurées pour les compositions décrites dans les précédents exemples.

La réductibilité du cérium est mesurée par réduction programmée en température de la manière suivante. On utilise un appareil Micromeritics Autochem 2920 avec un réacteur en quartz et un échantillon de 200 mg qui a été préalablement calciné 6 heures à 800°C sous air. Le gaz est l'hydrogène à 10% en volume dans l'argon et avec un débit de 25ml/min. La montée en température se fait de l'ambiante à 900°C à raison de 20°C/min. La détection du signal se fait avec un détecteur de conductivité thermique. La température est mesurée au niveau de l'échantillon à l'aide d'un thermocouple.

La réductibilité du cérium est calculée à partir de la consommation d'hydrogène, étant entendu qu'1/2 mole d'H₂ consommée et mesurée par la méthode décrite plus haut correspond à 1 mole de Ce IV réduit. La consommation d'hydrogène est calculée à partir de la surface manquante du signal d'hydrogène à la ligne de base à 30°C à la ligne de base à 900°C (respectivement 600°C) lorsqu'on mesure la réductibilité entre 30°C et 900°C (respectivement 600°C).

Les valeurs de réductibilité sont rassemblées dans le tableau 2.

**Tableau 2**

| Exemple | Réductibilité du cérium (%) | |
|---|---|---|
| | 30°C-600°C | 30°C-900°C |
| 1 | 41 | 100 |
| 2 | 44 | 87 |
| 3 | 41 | 82 |

Les exemples qui suivent concernent des compositions pour lesquelles le support est à base d'alumine stabilisée.

Les matières premières utilisées dans ces exemples sont les suivantes :
Boehmite Sasol SB1à 78% en poids en oxyde
Solution de nitrate de lanthane à 454 g/L en oxyde
Solution de nitrate cérique à 256 g/L en oxyde contenant 0,11 mol/L de cérium(III) et de rapport atomique Celll/cérium total de 0,06.
Solution de nitrate de zirconyle à 18,7% en poids en oxyde
Acide nitrique 68%vol
Ammoniaque 28%vol

### EXEMPLE 5

Cet exemple concerne une composition à base d'oxyde de cérium sur un support en alumine stabilisée par du lanthane dont les proportions massiques exprimées en oxyde sont 75%, 20% et 5% respectivement pour l'aluminium, le lanthane et le cérium.

Dans un bécher muni d'un barreau aimanté et d'une électrode de pH, on ajoute 96 g de boehmite à une solution acide contenant 19 g d'acide nitrique à 5 mol/L et 300 mL d'eau déminéralisée. Le pH de la solution est de 1,9. On ajoute à ce mélange, sous agitation, 35 g du sol d'oxyde de cérium décrit dans l'exemple 4 du brevet européen n° 208581 B1 puis un mélange de 74 g de nitrate de lanthane dans 50 mL d'eau déminéralisée. Ce mélange est alors introduit progressivement dans un pied de cuve contenant 25 g d'ammoniaque et 500 mL d'eau déminéralisée sous agitation. Le mélange réactionnel subit ensuite un mûrissement à 100°C pendant une heure. On sépare la phase solide du surnageant par centrifugation. La phase solide est redispersée dans de l'eau déminéralisée de telle sorte que le volume total soit de 600 mL. On procède ensuite à l'atomisation de la suspension sur un appareil de type Büchi 190 mini Spray Drier, température d'entrée = 230°C, température de sortie = 115°C.

La poudre obtenue est calcinée sous air à 600°C pendant 2h.

On indique ci-dessous les surfaces obtenues après calcinations ultérieures à différentes températures.
2h 600°C = 166 m²/g
6h 800°C = 120 m²/g
2h 900°C = 112 m²/g
2h 1000°C = 70 m²/g

### EXEMPLE 6 (hors invention)

Cet exemple concerne une composition à base d'oxyde mixte de cérium, de zirconium et de praséodyme à 25% massique d'oxydes sur un support d'alumine stabilisée par le lanthane dans les proportions massiques globales exprimées en oxyde de 14%/ 6%/ 5%/ 15%/ 60% respectivement pour CeO₂/ZrO₂/Pr₆O₁₁/La₂O₃/Al₂O₃.

### 1) Préparation d'une dispersion colloïdale d'oxyde mixte CeO₂-ZrO₂-Pr₆O₁₁

On procède au préalable à la préparation selon le procédé spécifique décrit plus haut d'une dispersion colloïdale de particules d'un oxyde mixte CeO₂-ZrO₂-Pr₆O₁₁.

Dans un bécher contenant 151 mL d'eau déminéralisée, on introduit sous agitation 320 g de solution de nitrate de cérium, 121,5 g de solution de nitrate de zirconyle et 70 g de solution de nitrate de praséodyme. La solution ainsi obtenue est progressivement introduite sous agitation dans un pied de cuve contenant 160g d'ammoniaque et 321 g d'eau déminéralisée. On sépare la phase solide du surnageant par filtration. La phase solide est lavée à l'eau déminéralisée sur un fritté. On redisperse la phase solide dans un mélange de 45 g d'acide nitrique et 250 g d'eau déminéralisée. On complète alors la solution obtenue avec de l'eau déminéralisée pour atteindre un volume total de 950 mL. La concentration de la solution est alors de 112 g/L d'oxydes et le pH de 1,0. On chauffe cette dispersion à 80°C pendant 1h et on obtient une dispersion colloïdale.

### 2) Dépôt de la dispersion colloïdale d'oxyde mixte CeO₂-ZrO₂-Pr₆O₁₁ sur le support d'alumine stabilisée par le lanthane

On ajoute à 125 g de la dispersion colloïdale d'oxyde mixte CeO₂-ZrO₂-Pr₆O₁₁ préparée en 1) une suspension de 38,5 g de boehmite et de 8 mL d'acide nitrique (5 M). On ajoute ensuite sous agitation 28 g de solution de nitrate de lanthane et on complète avec de l'eau déminéralisée pour obtenir un volume total de 500 mL. Ce mélange est introduit sous agitation et de manière progressive dans un pied de cuve contenant 22,5 g d'ammoniaque et 200 mL d'eau déminéralisée. Le pH final de la suspension est de 9. Le milieu est ensuite chauffé pendant 1h à 95°C puis est refroidi avant d'être filtré pour récupérer la phase solide qui est alors lavée à l'eau déminéralisée sur un fritté et redispersée dans de l'eau déminéralisée (volume total de 500 mL) à une concentration de 100 g/L en oxydes.

La suspension est alors atomisée sur un appareil de type Büchi 190 mini Spray Drier, température d'entrée = 225°C, température de sortie = 115°C.

La poudre obtenue est calcinée sous air à 800°C pendant 6h.

On indique ci-dessous les surfaces obtenues après calcinations ultérieures à différentes températures.
6h 800°C = 120 m²/g
2h 900°C = 94 m²/g
2h 1000°C = 71 m²/g

### EXEMPLE 7 (hors invention)

Cet exemple concerne une composition à base d'oxyde mixte de cérium, de zirconium et de praséodyme chargé à 25% massique d'oxydes sur un support en alumine stabilisée par du baryum dans les proportions massiques globales exprimées en oxyde de 14%/ 6%/ 5%/ 15%/ 60% respectivement pour CeO₂/ ZrO₂/ Pr₆O₁₁/ BaO/ Al₂O₃.

On ajoute sous agitation à 125 g de la dispersion colloïdale d'oxyde mixtes CeO₂-ZrO₂-Pr₆O₁₁ préparée en 1) de l'Exemple 6, une dispersion de 38,5 g de boehmite et 1,5 g d'acide nitrique concentré 15,2 mol/L. On ajoute ensuite sous agitation 515 mL d'eau déminéralisée pour obtenir une suspension à 50 g/L en oxydes. On introduit sous agitation et de manière progressive cette suspension dans un pied de cuve contenant 21 g d'ammoniaque et 176 mL d'eau déminéralisée. Le pH final de la suspension est de 9,3 en fin d'introduction. Le milieu est ensuite chauffé pendant 1h à 100°C puis est refroidi avant d'être filtré pour récupérer la phase solide qui est alors lavée à l'eau déminéralisée sur un fritté. Le solide est ensuite redispersé pour obtenir un volume total de 500 mL dans une solution de 160 mL d'eau déminéralisée et 13 g de nitrate de baryum.

La suspension est alors atomisée sur un appareil de type Büchi 190 mini Spray Drier, température d'entrée = 235°C, température de sortie = 110°C.

La poudre obtenue est calcinée sous air à 600°C pendant 2h.

On indique ci-dessous les surfaces obtenues après calcinations ultérieures à différentes températures.
2h 600°C = 142 m²/g
6h 800°C = 112 m²/g
2h 900°C = 93 m²/g
2h 1000°C = 76 m²/g

### EXEMPLE 8 (hors invention)

Cet exemple concerne une composition à base d'oxyde mixte de cérium, de zirconium et de lanthane à 25% massique d'oxydes sur un support d'alumine stabilisée par du baryum dans les proportions massiques globales exprimées en oxyde de 20,4/2,4/2,2/15/60% respectivement pour CeO₂/ZrO₂/La₂O₃/BaO/Al₂O₃.

### 1) Préparation d'une dispersion colloïdale d'oxyde mixte CeO₂-ZrO₂-La₂O₃

On prépare d'abord selon le procédé décrit dans l'Exemple 6 une dispersion colloïdale de particules d'un oxyde mixte de CeO₂-ZrO₂-La₂O₃.

Dans un bécher contenant 126 mL d'eau déminéralisée, on introduit sous agitation 457 g de solution de nitrate de cérium, 51 g de solution de nitrate de zirconyle et 33,5 g de solution de nitrate de lanthane. La solution ainsi obtenue est progressivement introduite sous agitation dans un pied de cuve contenant 165 g d'ammoniaque et 316 g d'eau déminéralisée. En fin d'introduction, le pH est 9,2. On sépare la phase solide du surnageant par filtration. La phase solide est lavée à l'eau déminéralisée sur un fritté. On redisperse la phase solide dans un mélange de 50 g d'acide nitrique et 200 g d'eau déminéralisée. On complète alors la solution obtenue avec de l'eau déminéralisée pour atteindre un volume total de 950 mL. La concentration de la solution est alors de 111,5 g/L d'oxydes et le pH de 0,9. On chauffe cette dispersion à 80°C pendant 1h et on obtient une dispersion colloïdale.

### 2) Dépôt de la dispersion colloïdale d'oxyde mixte CeO₂-ZrO₂-La₂O₃ sur le support d'alumine stabilisée par le baryum

On ajoute à 126 g de la dispersion colloïdale d'oxyde mixte CeO₂-ZrO₂-La₆O₃ préparée en 1) une suspension de 38,5 g de boehmite et de 8,5 mL d'acide nitrique (5 M) puis 535 mL d'eau déminéralisée. Ce mélange est introduit sous agitation et de manière progressive dans un pied de cuve contenant 25 g d'ammoniaque et 200 mL d'eau déminéralisée. Le pH final de la suspension est de 9,2. Le milieu est ensuite chauffé pendant 1h à 95°C puis est refroidi avant d'être filtré pour récupérer la phase solide qui est alors lavée à l'eau déminéralisée sur un fritté. Le solide est ensuite redispersé dans un mélange de 13g de nitrate de baryum et 160 mL d'eau déminéralisée. On complète ensuite avec de l'eau déminéralisée pour obtenir un volume total de 500 mL pour la suspension.

La suspension est alors atomisée sur un appareil de type Büchi 190 mini Spray Drier, température d'entrée = 225°C, température de sortie = 110°C.

La poudre obtenue est calcinée sous air à 600°C pendant 2h.

On indique ci-dessous les surfaces obtenues après calcinations ultérieures à différentes températures.
2h 600°C = 136 m²/g
6h 800°C = 105 m²/g
2h 900°C = 92 m²/g
2h 1000°C = 76 m²/g

### EXEMPLE 9 (hors invention)

Cet exemple concerne une composition à base d'oxyde mixte de cérium, de lanthane et de praséodyme à 25% massique d'oxydes sur un support en alumine stabilisée par du lanthane dans les proportions massiques globales exprimées en oxyde de 19/ 18/ 3/ 60% respectivement pour CeO₂/ La₂O₃/ Pr₆O₁₁/ Al₂O₃.

### 1) Préparation d'une dispersion colloïdale d'oxyde mixte CeO₂-La₂O₃-Pr₆O₁₁

On procède au préalable à la préparation d'une dispersion colloïdale de particules d'un oxyde mixte de CeO₂-La₂O₃-Pr₆O₁₁.

Dans un bécher contenant 147 mL d'eau déminéralisée, on introduit sous agitation 426 g de solution de nitrate de cérium, 48 g de solution de nitrate de lanthane et 38 g de solution de nitrate de praséodyme. La solution ainsi obtenue est progressivement introduite sous agitation dans un pied de cuve contenant 167g d'ammoniaque et 314 g d'eau déminéralisée. On sépare la phase solide du surnageant par filtration. La phase solide est lavée à l'eau déminéralisée sur un fritté. On redisperse la phase solide dans un mélange de 45 g d'acide nitrique 68%vol et 300 g d'eau déminéralisée. On complète alors la solution obtenue avec de l'eau déminéralisée pour atteindre un volume total de 1 L. La concentration de la solution est alors de 102 g/L d'oxydes et le pH de 1,0. On chauffe cette dispersion à 80°C pendant 1h et on obtient une dispersion colloïdale.

### 2) Dépôt de la dispersion colloïdale d'oxyde mixte CeO₂-La₂O₃-Pr₆O₁₁ sur le support d'alumine stabilisée par le lanthane

On ajoute à 137 g de la dispersion colloïdale d'oxyde mixte CeO₂-La₂O₃-Pr₆O₁₁ préparée en 1) une suspension de 38,5 g de boehmite et de 1,7 mL d'acide nitrique (15,2 M). On complète avec de l'eau déminéralisée pour obtenir un volume total de 650 mL. Le pH du milieu est 2,1. 28 g de solution de nitrate de lanthane sont ensuite introduite sous agitation et progressivement. Le mélange résultant est introduit sous agitation et de manière progressive dans un pied de cuve contenant 23 g d'ammoniaque et 200 mL d'eau déminéralisée. Le pH final de la suspension est de 9,2. Le milieu est ensuite chauffé pendant 1h à 96°C puis est refroidi à 50°C avant d'être filtré pour récupérer la phase solide qui est alors lavée à l'eau déminéralisée sur un fritté et redispersée dans 170 mL d'eau déminéralisée pour obtenir une concentration de 100 g/L en oxydes.

La suspension est alors atomisée sur un appareil de type Büchi 190 mini Spray Drier, température d'entrée = 240°C, température de sortie = 115°C.

La poudre obtenue est calcinée sous air à 800°C pendant 6h.

On indique ci-dessous les surfaces obtenues après calcinations ultérieures à différentes températures.
6h 800°C = 102 m²/g
2h 900°C = 83 m²/g
2h 1000°C = 61 m²/g

### EXEMPLE 10

Dans cet exemple, on donne les valeurs de réductibilité des compositions décrites dans les exemples 5 à 9.

La réductibilité des compositions est mesurée par réduction programmée en température de la manière suivante. On utilise un appareil Micromeritics Autochem 2920 avec un réacteur en quartz et un échantillon de 200 mg qui a été préalablement calciné 6 heures à 800°C sous air. Le gaz est l'hydrogène à 10% en volume dans l'argon et avec un débit de 25ml/min. La montée en température se fait de l'ambiante à 900°C à raison de 20°C/min. La détection du signal se fait avec un détecteur de conductivité thermique. La température est mesurée au niveau de l'échantillon à l'aide d'un thermocouple.

La réductibilité du cérium est calculée à partir de la consommation d'hydrogène, étant entendu qu'1/2 mole d'H₂ consommée et mesurée par la méthode décrite plus haut correspond à 1 mole de Ce IV réduit. La consommation d'hydrogène est calculée à partir de la surface manquante du signal d'hydrogène à la ligne de base à 30°C à la ligne de base à 900°C lorsqu'on mesure la réductibilité entre 30°C et 900°C.

Les valeurs de réductibilité sont rassemblées dans le tableau 3.

**Tableau 3**

| Exemple | Réductibilité du cérium (%) | Réductibilité du cérium et du praséodyme (%) |
|---|---|---|
| 5 | 100 | - |
| 6 | - | 81 |
| 7 | - | 84 |
| 8 | 96 | - |
| 9 | - | 81 |

Les exemples 6-9 sont hors invention.

### EXEMPLE 11

Mesure de performance catalytique en capacité de stockage des NOx en milieu oxydant.

Cet exemple illustre l'efficacité de ces matériaux utilisés comme support de métal précieux vis-à-vis de leur capacité de stocker des oxydes d'azote NOx pour des compositions catalytiques à 1% poids de platine préparées à partir des compositions des exemples précédents et de la manière qui suit.

5 g de composé selon l'un des exemples ci-dessus sont introduits dans un bécher puis recouverts d'eau (50 ml) avant l'addition d'une solution de sel hydroxyde tétraamine de platine (3,125 ml à 16 g/l). Après évaporation à l'évaporateur rotatif, la composition catalytique ainsi obtenue est séchée 2h à l'étuve à 120°C, puis calcinée à 500°C sous air pendant 2h et vieillie à 700°C sous un mélange 90% air-10% H₂O pendant 4 heures.

La mesure de la capacité de stockage des NOx est réalisée dans les conditions suivantes :
La composition catalytique telle que préparée ci-dessus est introduite dans un réacteur puis prétraitée à 300°C pendant 12 heures sous flux gazeux de composition suivante :
9% O₂ + 10% H₂O + 2%SO₂ + 79% N₂ (correspondant à 1000ppm SO₂).

Le réacteur est isolé puis refroidit à température ambiante sous flux de N₂. Cette composition catalytique ainsi sulfatée est introduite dans un nouveau réacteur et chauffée de la température de 150°C à la température de 600°C sous flux gazeux réducteur de composition suivante :
4,9% O₂ + 10% CO + 5% CO₂ + 10% HC (2500pm de C₃H₆+ 2500pm de C₃H₈ dans N₂) + 5% H₂O + 65.1% N₂.

La composition catalytique telle que préparée ci-dessus est ensuite maintenue sous ce flux réducteur pendant 20 minutes à la température de 600°C. Ce traitement a pour but de simuler un cycle de sulfatation - désulfatation.

Par la suite, le réacteur est isolé puis refroidit en statique à la température ambiante. Le flux réactionnel, de composition : 10% O₂ + 5% H₂O + 10% CO2 + 300ppm NO dans de l'azote, analysée en continu par un spectromètre infra-rouge à transformée de Fourrier (FT-IR) MAGNA 560 Nicolet, est introduit dans le réacteur catalytique préalablement placé à la température de réaction souhaitée, après stabilisation du flux suivi par l'analyse (NO + NO₂). Les concentrations respectives en NO et NO₂ en sortie du réacteur sont déterminées en continu par le spectromètre FTIR.

L'intégration des concentrations en NO et NO₂ pendant la minute qui a suivi l'arrivée du flux réactionnel sur la composition catalytique permet de calculer la quantité de NOx piégés. Les résultats sont exprimés par la quantité en masse de NOx piégés (%) à 1 minute, par rapport à la quantité totale de NOx alimentée pendant cette minute.

Les mesures sont ensuite réalisées sur d'autres échantillons de compositions catalytiques aux températures souhaitées.

Les quantités de NOx piégés aux températures de 200°C, 300°C, 350°C et 400°C sont reportées dans le tableau 4. Les compositions catalytiques des essais 1, 2 et 3 de ce tableau correspondent respectivement aux produits obtenus après imprégnation par le platine, selon le procédé décrit précédemment de la composition de l'exemple 5 (essai 1), 7 (essai 2) et 9 (essai 3).

**Tableau 4**

| essai | NOx piégés en% poids | | | |
|---|---|---|---|---|
| | 200°C | 250°C | 300°C | 400°C |
| Essai 1 (composition exemple 5) | 87 | 89 | 73 | 59 |
| Essai 2 (composition exemple 7) | 97 | Non déterminé | Non déterminé | 92 |
| Essai 3 (composition exemple 9) | 75 | Non déterminé | Non déterminé | 75 |

Les exemples 7 et 9 sont hors d'invention.
On voit à partir des résultats du tableau 4 que les compositions de l'invention présentent une efficacité en stockage des NOx importante dans la zone de température comprise entre 200°C et 400°C. Elles sont tout particulièrement efficaces dans la zone des basses températures, à 300°C ou en dessous, notamment à des températures aussi basses que 200°C. Les compositions catalytiques de l'invention sont donc particulièrement efficaces sur toute la gamme de températures et notamment aux basses températures, de 200°C à 300°C, et plus encore à 200°C et 250°C.

## Revendications

1. Composition consistant en un oxyde supporté et un support,
▪ l'oxyde supporté étant sous forme d'oxyde de cérium, et
▪ le support étant une alumine ou une alumine stabilisée par au moins un élément choisi parmi un ou plusieurs éléments en combinaison choisi(s) dans le groupe constitué par les terres rares, le silicium et le zirconium ;
les particules dudit oxyde supporté, déposées sur ledit support, étant individualisées ou sous forme d'agrégats, et présentant une taille d'au plus 50 nm, cette taille étant déterminée par diffraction des rayons X,
la proportion en oxyde supporté étant d'au plus 60% en masse de l'ensemble de la composition,
**caractérisée en ce qu'**elle présente après calcination de 6 heures à une température d'au moins 800°C, une réductibilité mesurée entre 30°C et 900°C d'au moins 80%,la réductibilité étant déterminée par la mesure de la consommation d'hydrogène de la composition mesurée entre 30°C et 900°C, la mesure étant faite par réduction programmée en température en utilisant de l'hydrogène dilué dans l'argon et un signal étant détecté avec un détecteur de conductivité thermique, la consommation de l'hydrogène étant calculée à partir de la surface manquante du signal d'hydrogène de la ligne de base à 30°C à la ligne de base à 900°C, le taux de réductibilité représentant le pourcentage de cérium réduit, étant entendu qu'1/2 mole d'H₂ consommée correspond à 1 mole de Ce^{IV} réduit.

2. Composition selon la revendication 1, **caractérisée en ce que** les particules, individualisées ou sous forme d'agrégats, ont une taille d'au plus 10 nm, plus particulièrement d'au plus 5 nm.

3. Composition selon l'une des revendications précédentes, **caractérisée en ce qu'**elle présente une réductibilité d'au moins 85%, plus particulièrement d'au moins 90%.

4. Composition selon l'une des revendications précédentes, **caractérisée en ce qu'**elle présente une proportion en oxyde supporté d'au plus 50% en masse, plus particulierement d'au plus 30%.

5. Système catalytique, **caractérisé en ce qu'**il comprend une composition selon l'une des revendications 1 à 4.

6. Procédé de traitement des gaz d'échappement des moteurs à combustion interne, **caractérisé en ce qu'**on utilise à titre de catalyseur un système catalytique selon la revendication 5 ou une composition selon l'une des revendications 1 à 4.

## Patentansprüche

1. Zusammensetzung, bestehend aus einem geträgerten Oxid und einem Träger,
▪ wobei das geträgerte Oxid in Form von Ceroxid vorliegt und
▪ wobei es sich bei dem Träger um ein Aluminiumoxid oder ein durch mindestens ein Element, das aus einem Element oder mehreren Elementen in Kombination ausgewählt ist, das bzw. die aus der Gruppe bestehend aus Seltenerdmetallen, Silicium und Zirconium ausgewählt ist bzw. sind, stabilisiertes Aluminiumoxid handelt;
wobei die auf dem Träger abgeschiedenen Teilchen des geträgerten Oxids separat sind oder in Form von Aggregaten vorliegen und eine Größe von höchstens 50 nm aufweisen, wobei diese Größe durch Röntgenbeugung bestimmt wird,
wobei der Anteil an geträgertem Oxid höchstens 60 Massen-% der gesamten Zusammensetzung beträgt, **dadurch gekennzeichnet, dass** sie nach 6 Stunden Calcinierung bei einer Temperatur von mindestens 800 °C eine zwischen 30 °C und 900 °C gemessene Reduzierbarkeit von mindestens 80 % aufweist, wobei die Reduzierbarkeit durch Messung des Wasserstoffverbrauchs der Zusammensetzung zwischen 30 °C und 900 °C bestimmt wird, wobei die Messung durch temperaturprogrammierte Reduktion unter Verwendung von in Argon verdünntem Wasserstoff gemessen wird und ein Signal mit einem Wärmeleitfähigkeitsdetektor detektiert wird, wobei der Wasserstoffverbrauch anhand der fehlenden Fläche des Wasserstoffsignals von der Basislinie bei 30 °C bis zur Basislinie bei 900 °C berechnet wird, wobei der Reduzierbarkeitsgrad den Prozentanteil von reduziertem Cer repräsentiert, wobei es sich versteht, dass 1/2 mol verbrauchtes H₂ 1 mol reduziertem Ce^{IV} entspricht.

2. Zusammensetzung nach Anspruch 1, **dadurch gekennzeichnet, dass** die separaten oder in Form von Aggregaten vorliegenden Teilchen eine Größe von höchstens 10 nm, spezieller höchstens 5 nm, aufweisen.

3. Zusammensetzung nach einem der vorhergehenden Ansprüche, **dadurch gekennzeichnet, dass** sie eine Reduzierbarkeit von mindestens 85 %, spezieller mindestens 90 %, aufweist.

4. Zusammensetzung nach einem der vorhergehenden Ansprüche, **dadurch gekennzeichnet, dass** sie einen Anteil an geträgertem Oxid von höchstens 50 Massen-%, spezieller höchstens 30 Massen-%, aufweist.

5. Katalytisches System, **dadurch gekennzeichnet, dass** es eine Zusammensetzung nach einem der Ansprüche 1 bis 4 umfasst.

6. Verfahren zur Behandlung von Abgasen von Verbrennungsmotoren, **dadurch gekennzeichnet, dass** man als Katalysator ein katalytisches System nach Anspruch 5 oder eine Zusammensetzung nach einem der Ansprüche 1 bis 4 verwendet.

## Claims

1. Composition consisting of a supported oxide and a support,
▪ the supported oxide being in the form of cerium oxide, and
▪ the support being an alumina or an alumina stabilized by at least one element chosen from one or more elements in combination chosen from the group consisting of the rare earth metals, silicon and zirconium;
the particles of said supported oxide, deposited on said support, being separated or in the form of aggregates, and exhibiting a size of at most 50 nm, this size being determined by X-ray diffraction,
the proportion of supported oxide being at most 60% by weight of the whole of the composition,
**characterized in that** it exhibits, after calcination at a temperature of at least 800°C for 6 hours, a reducibility, measured between 30°C and 900°C, of at least 80%, the reducibility being determined by the measurement of the hydrogen consumption of the composition measured between 30°C and 900°C, the measurement being carried out by temperature-programmed reduction using hydrogen diluted in argon and a signal being detected with a thermal conductivity detector, the consumption of the hydrogen being calculated from the missing surface area of the hydrogen signal from the base line at 30°C to the base line at 900°C, the degree of reducibility representing the percentage of reduced cerium, it being understood that 1/2 mol of H₂ consumed corresponds to 1 mol of Ce(IV) reduced.

2. Composition according to Claim 1, **characterized in that** the particles, separated or in the form of aggregates, have a size of at most 10 nm, more particularly of at most 5 nm.

3. Composition according to either of the preceding claims, **characterized in that** it exhibits a reducibility of at least 85%, more particularly of at least 90%.

4. Composition according to one of the preceding claims, **characterized in that** it exhibits a proportion of supported oxide of at most 50% by weight, more particularly of at most 30%.

5. Catalytic system, **characterized in that** it comprises a composition according to one of Claims 1 to 4.

6. Method for the treatment of the exhaust gases from internal combustion engines, **characterized in that** use is made, as catalyst, of a catalytic system according to Claim 5 or of a composition according to one of Claims 1 to 4.
